# EUROPÄISCHE PATENTSCHRIFT

(11) **EP 1 332 342 B1**
(45) Veröffentlichungstag und Bekanntmachung des Hinweises auf die Patenterteilung: **24.12.2008**
(21) Anmeldenummer: 01992874.6
(22) Anmeldetag: 29.10.2001
(51) Int. Cl.: G01G 23/01, G01G 21/24

(54) **WÄGEAUFNEHMER MIT JUSTIERGEWICHT**
WEIGHING SENSOR WITH CALIBRATION WEIGHT
CAPTEUR DE PESAGE AVEC POIDS D'AJUSTAGE

(30) Priorität: 04.11.2000 DE 10054847
(43) Veröffentlichungstag der Anmeldung: 06.08.2003
(73) Patentinhaber: SARTORIUS AG, 37075 Göttingen (DE)
(72) Erfinder: KUHLMANN, Otto, 37085 Göttingen (DE); CAPELLE, Thorsten, 37133 Friedland (DE); FLEISCHER, Peter, 37085 Göttingen (DE); HELMSEN, Friedrich, 37085 Göttingen (DE); ERBEN, Detlev, 37077 Göttingen (DE); MüLLER, Rudolf, 37120 Bovenden (DE)
(86) Internationale Anmeldenummer: PCT/EP2001/012487
(87) Internationale Veröffentlichungsnummer: WO 2002/037065

(56) Entgegenhaltungen:
- DE-A- 19 605 087
- DE-A- 19 953 987

## Beschreibung

Die Erfindung bezieht sich auf einen Wägeaufnehmer mit einem gehäusefesten Teil, mit einem Lastaufnehmer, der durch zwei Lenker beweglich mit dem gehäusefesten Teil verbunden ist, mit einem Hebelwerk, das aus mindestens einem Hebel besteht und das die auf den Lastaufnehmer einwirkende Belastung zu einem Messwandler überträgt, und mit einem eingebauten Justiergewicht, das zum Überprüfen und/oder Nachjustieren der Empfindlichkeit des Wägeaufnehmers auf einen Auflagebereich abgesenkt werden kann, wobei der Auflagebereich durch zwei weitere Lenker parallel geführt ist und über ein Koppelelement mit einem Hebel des Hebelwerkes verbunden ist.

Wägeaufnehmer dieser Art sind z. B. aus der DE 196 05 087 C2 bekannt. Sie werden vorzugsweise in Waagen hoher Auflösung mit Höchstlasten zwischen 100 g und 100 kg eingesetzt. Das Hebelwerk setzt dabei die am Lastaufnehmer wirkende Belastung auf die geringere, vom Messwandler zu verkraftende Belastung herab. Als Messwandler wird häufig die Spule/Magnet-Kombination einer elektromagnetischen Kraftkompensation benutzt. Es ist jedoch auch der Einsatz anderer Messwandler möglich, wie z. B. schwingende Saiten oder Dehnungsmessstreifen. Das eingebaute Justiergewicht wirkt auf einen Hebel des Hebelwerkes ein und erlaubt es dadurch, mit einem relativ kleinen Justiergewicht eine relativ große Last am Lastaufnehmer zu simulieren. Die beiden weiteren Lenker der Parallelführung für den Auflagebereich des Justiergewichtes verbinden den Auflagebereich mit dem gehäusefesten Teil und sorgen so für eine gewisse Unabhängigkeit vom Ort der Auflage des Justiergewichtes. Sie führen jedoch im Raum zwischen Lastaufnehmer, gehäusefestem Teil und den beiden Lenkern zu erheblichen Platzproblemen, die die Gestaltungsmöglichkeiten für das Hebelwerk und die weitere Parallelführung stark einschränken und zu einer tendenziellen Vergrößerung der Bauhöhe des Wägeaufnehmers führen.

Um diese Nachteile zu umgeben, wurde bereits vorgeschlagen (DE 100 07 267), das Justiergewicht nicht im vom Lastaufnehmer, dem gehäusefesten Teil und von den Lenkern umgrenzten Raum unterzubringen, sondern auf der anderen Seite des Lastaufnehmers, einen Hebelarm des Hebelwerkes durch den Lastaufnehmer hindurch zu verlängern und das Justiergewicht direkt auf diesen Hebelarm abzusenken. Das Absenken des Justiergewichtes auf einen Hebelarm eines Übersetzungshebels führt aber zu einer starken Abhängigkeit der Wirkung des Justiergewichtes vom Ort der Auflage, sodass eine sehr exakte und damit aufwendige Hubvorrichtung oder Gewichtsauflage nötig ist.

In ähnlicher Weise ist in der DE 199 53 987 A1 vorgesehen, einen Übersetzungshebel durch zwei seitlich angeschraubte Bleche zu verlängern und diese Verlängerungsbleche mit je einer Kerbe zur Aufnahme eines Justiergewichtes zu versehen. Das Justiergewicht wird also wieder auf einen Übersetzungshebel abgesenkt, sodass auch in dieser Variante die starke Ortsabhängigkeit auftritt.

Aufgabe der Erfindung ist es nun, die Platzprobleme im Raum zwischen Lastaufnehmer, gehäusefestem Teil und den beiden Lenkern zu umgehen, ohne jedoch eine aufwendige Hubvorrichtung einsetzen zu müssen.

Erfindungsgemäß wird dies dadurch erreicht, dass die beiden weiteren Lenker einerseits mit dem Auflagebereich und andererseits mit dem Lastaufnehmer verbunden sind, und sich auf der dem Hebelwerk gegenüberliegenden Seite des Lastaufnehmers befinden.

Die beiden weiteren Lenker werden also nicht am gehäusefesten Teil angelenkt, wie beim Stand der Technik, sondern am Lastaufnehmer. Dadurch besteht die Möglichkeit, die weiteren Lenker nicht im Raum zwischen dem Lastaufnehmer und dem gehäusefesten Teil anzuordnen, sondern auf der gegenüberliegenden Seite des Lastaufnehmers, da eine Verbindung zum gehäusefesten Teil ja nicht mehr notwendig ist. Da der Lastaufnehmer über die beiden (Haupt-) Lenker mit dem gehäusefesten Teil verbunden ist, ist der Auflagebereich für das Justiergewicht bei der erfindungsgemäßen Lösung indirekt auch mit dem gehäusefesten Teil parallelgeführt verbunden, eine direkte Verbindung ist jedoch nicht notwendig.

Vorteilhafte Ausgestaltungen und Weiterbildungen ergeben sich aus den Unteransprüchen.

Die Erfindung wird im Folgenden anhand der Figuren beschrieben. Dabei zeigt:
Figur 1 eine schematische Seitenansicht des Wägeaufnehmers und
Figur 2 eine perspektivische Ansicht des Wägeaufnehmers.

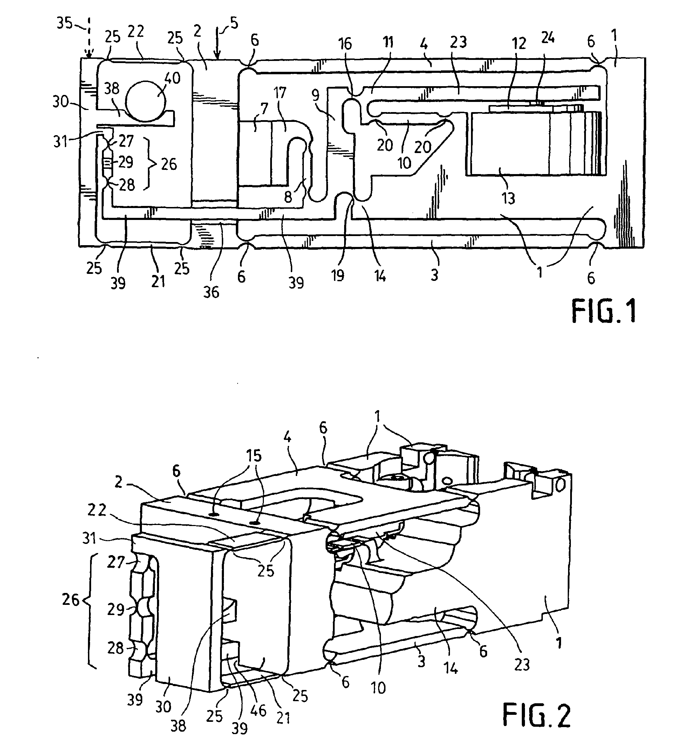

Zur Erläuterung des prinzipiellen Aufbaus des Wägeaufnehmers ist dieser in Figur 1 schematisch in einer Seitenansicht gezeigt. Man erkennt einen Lastaufnehmer 2, der über einen oberen Lenker 4 und einen unteren Lenker 3 in Form einer Parallelführung mit einem gehäusefesten Grundkörper 1 verbunden ist. Die Gelenkstellen der Lenker sind mit 6 bezeichnet. Am Lastaufnehmer 2 ist die nicht gezeichnete Waagschale befestigt. Die einwirkende Kraft des Wägegutes ist nur durch einen vertikalen Pfeil 5 angedeutet. Die Gewichtskraft des Wägegutes wird nun von einem Vorsprung 7/17 des Lastaufnehmers 2 über ein erstes, vertikales Kraftübertragungselement 8 auf einen Winkelhebel 9 übertragen. Der Winkelhebel 9 ist mit einer Dünnstelle 19 an einem Vorsprung 14 des Grundkörpers 1 gelagert. Der kurze, waagerechte Hebelarm des Winkelhebels 9 ist gleich dem waagerechten Abstand zwischen dem Kraftübertragungselement 8 und der Dünnstelle 19; der lange, vertikale Hebelarm ist gleich dem vertikalen Abstand zwischen der Dünnstelle 19 und der Dünnstelle 16.

An der Dünnstelle 16 wird die reduzierte und umgelenkte Gewichtskraft auf einen zweiten Winkelhebel 11 übertragen, der sich über ein horizontales Kraftübertragungselement 10 am Grundkörper 1 abstützt. Der kurze, vertikale Hebelarm des Winkelhebels 11 ist gleich dem vertikalen Abstand zwischen der Dünnstelle 20 des Kraftübertragungselementes 10 und der Dünnstelle 16; sein langer, horizontaler Hebelarm 23 ist gleich dem horizontalen Abstand zwischen der Dünnstelle 16 und dem Befestigungspunkt 24 der Spule. Die Spule 12 befindet sich im Luftspalt des Permanentmagneten 13, der direkt am Grundkörper 1 befestigt ist.

Die im Vorstehenden beschriebene Anordnung der Parallelführung und des Hebelwerkes aus den beiden Hebeln 9 und 11 ist bereits aus der DE 195 40 782 C1 bekannt und deshalb hier nur kurz erläutert.

Der erfindungsgemäße Wägeaufnehmer weist nun zwei weitere Lenker 21 und 22 mit den Gelenkstellen 25 auf, die als Parallelführung eine vertikale Stütze 30 mit einem vorkragenden Auflagebereich 38 für ein Justiergewicht 40 mit dem Lastaufnehmer 2 verbinden. Bei aufliegendem Justiergewicht wird dessen Gewichtskraft über einen Vorsprung 31 und ein Koppelelement 26 auf eine Verlängerung 39 des Winkelhebels 9 übertragen. Das Koppelelement 26 weist dabei zwei parallele Dünnstellen 27 und 28 an den Enden auf und eine mittlere Dünnstelle 29, deren Drehachse senkrecht zu den Drehachsen der Dünnstellen 27 und 28 ist. Dadurch werden auch bei einer leichten Verkippung der Stütze 30 mit dem Auflagebereich 38 - beispielweise verursacht durch ein Verkippen des Lastaufnehmers 2 bei ausmittiger Belastung - Zwangskräfte auf die Verlängerung 39 des Hebels 9 verhindert.

Wenn beim Hebel 9/39 der Hebelarm zwischen dem Lagergelenk 19 und der Dünnstelle 28 des Koppelelementes 26 zehnmal größer ist als der Hebelarm zwischen dem Lagergelenk 19 und dem Kraftübertragungselement 8, so wirkt ein Justiergewicht 40 von z. B. 100 g genauso wie ein Gewichtsstück von einem Kilogramm auf einer mit dem Lastaufnehmer 2 verbundenen Waagschale. Dieses hohe Übersetzungsverhältnis von 1:10 lässt sich bei der Anordnung der weiteren Lenkern 21 und 22 auf der linken Seite des Lastaufnehmers 2 (in der Darstellungsweise von Figur 1) gemäß der Erfindung leicht erreichen, da für die Hebelverlängerung 39 genügend Platz vorhanden ist. Demgegenüber ist bei der Anordnung der weiteren Lenker gemäß dem Stand der Technik (DE 196 05 087) zwischen den (Haupt-) Lenkern 3 und 4 kein ausreichender Platz für einen langen Hebelarm vorhanden.

Die Hubvorrichtung zum Anheben/Absenken des Justiergewichtes 40 ist in Figur 1 der Übersichtlichkeit halber weggelassen, da sie allgemein bekannt ist. Die in Figur 1 gezeigte Lage des Justiergewichtes - auf dem Auflagebereich 38 aufliegend - ist die Lage während des Kalibrier-/Justiervorganges; in der Wägestellung ist das Justiergewicht angehoben und wird gehäusefest gehalten. Die in Figur 1 gezeigte Anordnung des Justiergewichtes links vom Lastaufnehmer 2 hat im Bezug auf die Hubvorrichtung den weiteren Vorteil, dass bei einer Baureihe von Wägeaufnehmern mit verschiedenen Höchstlasten die gleiche Hubvorrichtung sowohl für die erfindungsgemäßen Wägeaufnehmer mit Wirkung des Justiergewichtes über eine Hebelübersetzung als auch für niederlastige Wägeaufnehmer mit direkt auf den Lastaufnehmer 2 wirkendem Justiergewicht benutzt werden kann. Im letzteren Fall müsste in Figur 1 nur der Auflagebereich 38 mit dem Lastaufnehmer 2 verbunden sein und die Stütze 30, die weiteren Lenker 21 und 22 und die Hebelverlängerung 39 würden stattdessen entfallen. - Es ist jedoch mit einer etwas komplizierteren Hubvorrichtung auch möglich, das Justiergewicht 40 entweder auf den Auflagebereich 38 (wie in Figur 1 gezeichnet) abzusenken oder auf einen mit dem Lastaufnehmer 2 verbundenen Aufnahmebereich (in Figur 1 nicht eingezeichnet). Dadurch kann in dieser Variante zusätzlich das Übersetzungsverhältnis zwischen der Auflage mit Hebelübersetzung und der direkten Auflage von Zeit zu Zeit kontrolliert werden.

Bildet man die Stütze 30 so aus, dass die zu messende Gewichtskraft auch an der Stütze 30 eingeleitet werden kann - in Figur 1 ist dies durch den gestrichelt eingezeichneten Kraftpfeil 35 angedeutet - so bietet der erfindungsgemäße Wägeaufnehmer die Möglichkeit zur Realisation einer Zweibereichswaage: Wird die zu messende Kraft am Lastaufnehmer 2 eingeleitet (Kraftpfeil 5), so hat der Wägeaufnehmer z. B. eine Höchstlast von 10 kg und eine Auflösung von 0,1 g; wird die zu messende Kraft an der Stütze 30 eingeleitet (Kraftpfeil 35), so hat der Wägeaufnehmer eine Höchstlast von 1 kg bei einer Auflösung von 0,01 g. Konstruktiv kann der Wechsel der Krafteinleitung z. B. so realisiert sein, dass sowohl der Lastaufnehmer 2 als auch die Stütze 30 an ihrer Oberseite ein Sackloch aufweisen; die Waagschale kann dann in das eine oder das andere Sackloch eingesteckt werden.

In Figur 2 ist eine wirkliche Ausführungsform des Wägeaufnehmers in einer perspektivischen Ansicht gezeigt. Gleiche Teile wie in Figur 1 sind mit den gleichen Bezugszahlen gekennzeichnet, auch wenn sie zeichnerisch anders dargestellt sind. Man erkennt den gehäusefesten Teil 1, die beiden Lenker 3 und 4 und den Lastaufnehmer 2. Der Lastaufnehmer 2 weist auf seiner Oberseite zwei Gewindebohrungen 15 zum Befestigen der nicht dargestellte Waagschale auf. Das Hebelwerk 8...11 ist zum größten Teil hinter dem Lastaufnehmer 2 verborgen, man erkennt nur das horizontale Kraftübertragungselement 10 und den hinteren Hebelarm 23 des Hebels 11. Links vor dem Lastaufnehmer 2 erkennt man die beiden weiteren Lenker 21 und 22 mit den Gelenkstellen 25, die die Stütze 30 vertikal beweglich mit dem Lastaufnehmer 2 verbinden. Die Stütze 30 und die weiteren Lenker 21 und 22 sind schmaler als der Lastaufnehmer 2, sodass das Koppelelement 26 neben der Stütze 30 angeordnet sein kann und sich trotzdem mittig in der Symmetrieebene des ganzen Wägeaufnehmers und damit in der selben Ebene wie die Verlängerung 39 des Hebels 9 befindet. Außerdem ergibt die in Figur 2 gezeigte Anordnung des Koppelelementes ganz am linken Rande des Wägeaufnehmers eine - bei vorgegebener Baulänge des Wägeaufnehmers - maximale Länge der Verlängerung 39 des Hebels 9 und damit ein maximales Übersetzungsverhältnis zwischen dem eingebauten Justiergewicht und der damit simulierbaren Belastung am Lastaufnehmer. Diese Ausgestaltung mit der Anordnung des Koppelelementes 26 - vom Lastaufnehmer 2 aus gesehen - jenseits des Justiergewichtes ist also besonders vorteilhaft. Unabhängig vom Durchmesser des Justiergewichtes wird dadurch die Baulänge des Wägeaufnehmers ganz für den langen Hebelarm 39 und damit für ein hohes Übersetzungsverhältnis genutzt. - Demgegenüber wirkt bei der Lösung gemäß der DE 100 07 267 die Gewichtskraft des Justiergewichtes an dessen Schwerpunkt , so dass der halbe Durchmesser des Justiergewichtes für die Länge des langen Hebelarmes verloren geht.

Die Funktion der Dünnstellen 27, 28, und 29 wurde schon anhand von Figur 1 erläutert, man erkennt in Figur 2 zusätzlich deutlich, dass sich die Dünnstelle 29 etwa in halber Höhe des Wägeaufnehmers befindet, damit die durch die Dünnstelle 29 gegebene Drehachse möglichst mit der virtuellen Drehachse, um die sich der Lastaufnehmer 2 bei ausmittiger Belastung verdreht, übereinstimmt.

Der Auflagebereich 38 für das nicht eingezeichnete Justiergewicht ist auf der in Figur 2 nicht erkennbaren Rückseite der Stütze 30 mit dieser verbunden.

Die Verlängerung 39 des Hebels 9 verläuft in einer grabenförmigen Senke 46 im Lastaufnehmer 2.

Weiter erkennt man in Figur 2, dass der gehäusefeste Teil 1, der Lastaufnehmer 2, die beiden Lenker 3 und 4, das Hebelwerk (8...11), die beiden weiteren Lenker 21 und 22, das Koppelelement 26, die Stütze 30 und der Auflagebereich 38 für das Justiergewicht monolithisch aus einem einzigen Metallblock herausgearbeitet sind. Diese Bauweise führt zu einer sehr reproduzierbaren Arbeitsweise des Wägeaufnehmers und der Kalibrierung/Justierung, da die bei Wägeaufnehmern, die aus einzelnen Bauteilen zusammen montiert sind, unvermeidlichen Geometrieänderungen durch Mikrorutschen vermieden wird.

Die übliche Justierung der Ecklastfreiheit der Parallelführung aus den Lenkern 3 und 4 erfolgt durch geringfügigen Materialabtrag an den Dünnstellen 6. In gleicher Weise erfolgt die Justierung der Parallelführung aus den zusätzlichen Lenkern 21 und 22 durch geringfügigen Materialabtrag an den Dünnstellen 25.

Die erfindungsgemäße Anordnung der beiden zusätzlichen Lenker 21 und 22 und der Stütze 30 mit dem Auflagebereich 38 links vom Lastaufnehmer 2 - in der Darstellungsweise von Figur 1 und 2 - hat den weiteren Vorteil, dass genügend Platz für das Justiergewicht 40 vorhanden ist. Verschiedene Formen des Jutiergewichtes sind dadurch möglich: In Figur 1 ist ein zylinderförmiges Justiergewicht angedeutet. Dieses kann an den Enden zur Vergrößerung der Masse hantelförmige Verdickungen aufweisen. Es sind aber auch U-förmige Justiergewichte mit nach unten offenen Schenkeln möglich. Dadurch kann der Schwerpunkt des Justiergewichtes bei großen Massen näher an die Stütze 30 herangebracht werden (wodurch sich die Beanspruchung der zusätzlichen Lenker 21 und 22 verringert und diese dünner ausgebildet werden können). Auch eine Anpassung des Schwerpunktes des Justiergewichtes in vertikaler Richtung ist durch verschieden lange Schenkel möglich. Dadurch kann der Schwerpunkt z. B. auf die Höhe der Dünnstelle 29 des Koppelelementes 26 gebracht werden, was in manchen Fällen vorteilhaft ist.

Die Erfindung wurde im Vorstehenden am Beispiel eines Hebelwerkes mit zwei Hebeln beschrieben. Die Erfindung ist auch mit anderen Hebelwerken einsetzbar, z. B. einem Hebelwerk mit drei Hebeln, wie es aus der DE 199 23 207 bekannt ist.

## Patentansprüche

1. Wägeaufnehmer mit einem gehäusefesten Teil (1) mit einem Lastaufnehmer (2), der durch zwei Lenker (3, 4) beweglich mit dem gehäusefesten Teil verbunden ist, mit einem Hebelwerk (8...11), das aus mindestens einem Hebel besteht und das die auf den Lastaufnehmer einwirkende Belastung zu einem Messwandler (12, 13) überträgt, und mit einem eingebauten Justiergewicht (40), das zum Überprüfen und/oder Nachjustieren der Empfindlichkeit des Wägeaufnehmers auf einen Auflagebereich (30/38) abgesenkt werden kann, wobei der Auflagebereich durch zwei weitere Lenker (21, 22) parallel geführt ist und über ein Koppelelement (26) mit einem Hebel (9/39) des Hebelwerkes verbunden ist, **dadurch gekennzeichnet, dass** die beiden weiteren Lenker (21, 22) einerseits mit dem Auflagebereich (30/38) und andererseits mit dem Lastaufnehmer (2) verbunden sind, und sich auf der dem Hebelwerk (8...11) gegenüberliegenden Seite des Lastaufnehmers (2) befinden.

2. Wägeaufnehmer nach Anspruch 1, **dadurch gekennzeichnet, dass** das Koppelelement (26) so angeordnet ist, dass sich das Justiergewicht (40) zwischen dem Koppelelement (26) und dem Lastaufnehmer (2) befindet.

3. Wägeaufnehmer nach einem der Ansprüche 1 oder 2, **dadurch gekennzeichnet, dass** das Koppelelement (26) drei Dünnstellen (27, 28 29) aufweist, und dass die mittlere Dünnstelle (29) sich etwa in halber Höhe zwischen den Lenkern (3, 4) befindet und ihre Achse senkrecht zu den Achsen der beiden äußeren Dünnstellen (27, 28) steht.

4. Wägeaufnehmer nach einem der Ansprüche 1 bis 3, **dadurch gekennzeichnet, dass** die weiteren Lenker (21, 22) schmaler sind als die (Haupt-) Lenker (3, 4).

5. Wägeaufnehmer nach einem der Ansprüche 1 bis 4, **dadurch gekennzeichnet, dass** das gehäusefeste Teil (1), der Lastaufnehmer (2), die beiden Lenker (3, 4), das Hebelwerk (8...11), die beiden weiteren Lenker (21, 22), das Koppelelement (26) und die Stütze (30) mit dem Auflagebereich (38) für das Justiergewicht (40) monolithisch aus einem einzigen Metallblock herausgearbeitet sind.

6. Wägeaufnehmer nach einem der Ansprüche 1 bis 5, **dadurch gekennzeichnet, dass** der Schwerpunkt des Justiergewichtes (40) sich möglichst nahe am Koppelelement (26) befindet.

7. Wägeaufnehmer nach einem der Ansprüche 1 bis 6, **dadurch gekennzeichnet, dass** die Stütze (30) so ausgebildet ist, dass die Belastung des Wägeaufnehmers entweder am Lastaufnehmer (2) oder an der Stütze (30) erfolgen kann.

## Claims

1. Weighing sensor with a part (1) which is fixed relative to a housing, with a load pick-up (2) movably connected by two guides (3, 4) with the part fixed relative to the housing, with a lever mechanism (8 ... 11), which consists of at least one lever and which transmits the load acting on the load pick-up to a measurement transducer (12, 13), and with an incorporated calibration weight (40), which can be lowered for checking and/or readjusting the sensitivity of the weighing sensor to a support region (30/38), wherein the support region has parallel guidance by two further guides (21, 22) and is connected by way of a coupling element (26) with a lever (9/39) of the lever mechanism, **characterised in that** the two further guides (21, 22) are connected on the one hand with the support region (30/38) and on the other hand with the load pick-up (2) and are disposed on the side of the load pick-up (2) opposite the lever mechanism (8 ... 11).

2. Weighing sensor according to claim 1, **characterised in that** the coupling element (26) is so arranged that the calibration weight (40) is disposed between the coupling element (26) and the load pick-up (2).

3. Weighing sensor according to one of claims 1 and 2, **characterised in that** the coupling element (26) has three thin places (27, 28, 29) and that the middle thin place (29) is disposed approximately at half the height between the guides (3, 4) and its axis is perpendicular to the axes of the two outer thin places (27, 28).

4. Weighing sensor according to any one of claims 1 to 3, **characterised in that** the further guides (21, 22) are narrower than the (main) guide (3, 4).

5. Weighing sensor according to any one of claims 1 to 4, **characterised in that** the part (1) fixed relative to the housing, the load pick-up (2), the two guides (3, 4), the lever mechanism (8 ... 11), the two further guides (21, 22), the coupling element (26) and the supports (30) with the support region (38) for the calibration weight (40) are formed monolithically from a single metal block.

6. Weighing sensor according to any one of claims 1 to 5, **characterised in that** the centre of gravity of the calibration weight (40) is disposed as close as possible to the coupling element (26).

7. Weighing sensor according to any one of claims 1 to 6, **characterised in that** the supports (30) are so constructed that the loading of the weighing sensor can be effected either at the load pick-up (2) or at the supports (30).

## Revendications

1. Capteur de pesage avec une partie (1) solidaire du boîtier, avec un capteur de charge (2), qui est relié de manière mobile avec la partie solidaire du boîtier par l'intermédiaire de deux bras oscillants (3, 4), avec un mécanisme à levier (8 ... 11), qui est formé par au moins un levier et par lequel la charge agissant sur le capteur de charge est transmise sur un transformateur de mesure (12, 13), et avec un poids d'ajustage (40) intégré, qui peut être abaissé pour vérifier et/ou corriger la sensibilité du capteur de pesage sur une zone de support (30/38), ladite zone de support étant guidée parallèlement par deux autres bras oscillants (21, 22) et étant reliée à un levier (9/39) du mécanisme à levier par l'intermédiaire d'un élément de couplage (26), **caractérisé en ce que** les deux autres bras oscillants (21, 22) sont reliés, d'une part, avec la zone de support (30/38) et, d'autre part, avec le capteur de charge (2), et sont situés sur le côté du capteur de charge (2), opposé au mécanisme à levier (8 ... 11).

2. Capteur de pesage selon la revendication 1, **caractérisé en ce que** l'élément de couplage (26) est agencé de telle sorte que le poids d'ajustage (40) est situé entre l'élément de couplage (26) et le capteur de charge (2).

3. Capteur de pesage selon la revendication 1 ou 2, **caractérisé en ce que** l'élément de couplage (26) comporte trois zones minces (27, 28, 29), et **en ce que** la zone mince centrale (29) se situe à peu près à mi-hauteur entre les bras oscillants (3, 4) et son axe est perpendiculaire aux axes des deux zones minces extérieures (27, 28).

4. Capteur de pesage selon l'une quelconque des revendications 1 à 3, **caractérisé en ce que** les autres bras oscillants (21, 22) sont plus étroits que les bras oscillants (principaux) (3, 4).

5. Capteur de pesage selon l'une quelconque des revendications 1 à 4, **caractérisé en ce que** la partie (1) solidaire du boîtier, le capteur de charge (2), les deux bras oscillants (3, 4), le mécanisme à levier (8 ... 11), les deux autres bras oscillants (21, 22), l'élément de couplage (26) et le support (30) avec la zone de support (38) pour le poids d'ajustage (40) sont réalisés sous forme monolithique dans un seul bloc de métal.

6. Capteur de pesage selon l'une quelconque des revendications 1 à 5, **caractérisé en ce que** le centre de gravité du poids d'ajustage (40) se situe aussi près que possible de l'élément de couplage (26).

7. Capteur de pesage selon l'une quelconque des revendications 1 à 6, **caractérisé en ce que** le support (30) est réalisé de telle sorte que la sollicitation du capteur de pesage peut être effectuée soit sur le capteur de charge (2) soit sur le support (30).
